# EUROPÄISCHE PATENTSCHRIFT

(11) **EP 2 753 807 B1**
(45) Veröffentlichungstag und Bekanntmachung des Hinweises auf die Patenterteilung: **25.11.2015**
(21) Anmeldenummer: 12765987.8
(22) Anmeldetag: 03.09.2012
(51) Int. Cl.: F02B 31/06, F02M 35/10

(54) **STRÖMUNGSKÖRPER, MASKIERUNGSMODUL FÜR DEN EINLASS EINER BRENNKRAFTMASCHINE UND BRENNKRAFTMASCHINE**
FLOW BODY, MASKING MODULE FOR THE INLET OF AN INTERNAL COMBUSTION ENGINE, AND INTERNAL COMBUSTION ENGINE
CORPS D'ÉCOULEMENT, MODULE DE MASQUAGE POUR UNE ADMISSION D'UN MOTEUR À COMBUSTION INTERNE ET MOTEUR À COMBUSTION INTERNE

(30) Priorität: 07.09.2011 DE 102011112862
(43) Veröffentlichungstag der Anmeldung: 16.07.2014
(73) Patentinhaber: Volkswagen Aktiengesellschaft, 38440 Wolfsburg (DE)
(72) Erfinder: DRÜCKHAMMER, Jens, 38108 Braunschweig (DE); KAPITZA, Lars, 38104 Braunschweig (DE); REISCH, Uwe, 38442 Wolfsburg (DE)
(86) Internationale Anmeldenummer: PCT/EP2012/003671
(87) Internationale Veröffentlichungsnummer: WO 2013/034265

(56) Entgegenhaltungen:
- EP-A2- 0 940 575
- DE-A1-102009 043 076
- FR-A1- 2 877 044
- FR-A1- 2 913 060
- FR-A1- 2 924 171

## Beschreibung

Die Erfindung betrifft ein Maskierungsmodul mit einem Strömungskörper. Die Erfindung betrifft darüber hinaus eine Brennkraftmaschine mit einem solchen Maskierungsmodul.

Der Wirkungsgrad und die Emissionen einer Brennkraftmaschine sind abhängig von der Verteilung des Gemischs im Brennraum zur Verbrennung. Die gewünschte Verteilung des Gemischs wird von der Bewegung des Gemischs in dem Brennraum, der sogenannten Ladungsbewegung, und im Wesentlichen von der Bewegung beim Einströmen der Luft und/oder des Kraftstoff-Luft-Gemischs in den Brennraum beeinflusst. Bei der Ladungsbewegung im Brennraum wird zwischen einer Drallbewegung und einer Tumblebewegung unterschieden. Bei einem zylinderförmigen Brennraum ist eine Drallbewegung eine Drehbewegung der Ladung um die Zylinderachse und eine Tumblebewegung diejenige um eine Senkrechte zur Zylinderachse. Das Drall- und Tumble-Verhalten der Ladungsbewegung wird durch die Geometrie des Einlasskanals hervorgerufen. Die sogenannte Einströmcharakteristik ist abhängig von der geometrischen Ausformung der Einlassöffnung und des Einlasses.

Die unterschiedlichen Formen der Ladungsbewegung haben einen starken Einfluss auf die Flammengeschwindigkeit. Der Vorteil einer erhöhten Brenngeschwindigkeit liegt in der möglichen Gemischabmagerung und der damit verbundenen Senkung des spezifischen Kraftstoffverbrauchs. Tumble-Strömungen werden überwiegend bei Mehrventilmotoren mit einem Einlass je Brennraum erzeugt. Bei Brennkraftmaschinen mit mehreren Einlässen je Brennraum kann wenigstens ein Einlass abschaltbar ausgeführt sein. Bei diesen Brennkraftmaschinen wird zumindest bei niedrigen Drehzahlen überwiegend eine Drallströmung erzeugt.

Die Ladungsbewegung kann abgesehen von der Geometrie des Einlasses auch von einer Maskierung beeinflusst werden. Eine Maskierung ist in der Regel eine Abrisskante, welche eine Ablösung der Luftströmung von der Oberfläche des Einlasses bewirkt. Die Maskierung ist entweder am Einlassventilsitz oder in dem Einlass nahe dem Ventilsitz angeordnet. Eine starre, unveränderliche Maskierung hat jedoch den Nachteil, dass der Einlass durch die Maskierung verengt wird und somit der maximale Volumenstrom in dem Einlass begrenzt ist.

Verschiedene Ausführungsformen von schwenkbaren Maskierungen sind aus der Druckschrift WO 95/17589 A1 bekannt. Diese zeigt einen Hubkolbenmotor mit einem kanalförmigen Einlass, in dem ein Mittel zur Veränderung seines freien Strömungsquerschnitts angeordnet ist. Bei derartig schwenkverstellbaren Maskierungen ist es jedoch stets schwierig, den Einlass gegenüber der Umgebung gasdicht auszuführen. Auch können sich an der Maskierung Ablagerungen von Ruß oder Kraftstoffrückständen bilden, welche die Verstellbewegung beeinträchtigen.

Im Dokument DE 198 09 052 A1 ist ein Maskierungselement für den Einlass eines Brennraums einer Brennkraftmaschine beschrieben. Das Maskierungselement umfasst einen im Einlass asymmetrisch angeordneten Dehnkörper, welcher durch Einpumpen eines Fluids aufgebläht werden kann, wodurch eine Rampe gebildet wird, so dass die Anströmungsrichtung des geführten Gases auf ein Einlassventil des Brennraums vorgegeben wird.

Aus dem Dokument EP 1 555 422 A1 ist ein mehrflutiger Einlasskanal für einen Brennraum einer Brennkraftmaschine bekannt, dessen Fluten von einer schneidenartigen Platte getrennt sind. Das stromaufwärts gelegene Ende der Platte bildet Verschlussstück für eine der Fluten auf der stromaufwärtigen Seite vorgesehen, indem es flexibel schenkbar mittels eines nicht näher bezeichneten Betätigungsorgans ist. Auf diese Weise wird eine Engstelle im Einlasskanal erzeugt, so dass die Strömungsgeschwindigkeit des einströmenden Gases erhöht wird.

Aus FR 2 913 060 A1, EP 0 940 572 A2, FR 2 924 171 A1, DE 10 2007 043 076 A1 und FR 2 877 044 A1 sind verschiedene Maskierungsmodule für den Einlass von Brennkraftmaschinen bekannt, die einen Strömungskörper aufweisen, welcher eine Ablenkung der durch den Einlass strömenden Luft und/oder des Kraftstoff-Luft-Gemischs beim Übertritt aus dem Einlass durch eine Einlassöffnung in einen Brennraum ermöglicht. Bei diesen Maskierungsmodulen weist der Strömungskörper ein elastisches Material auf. Ferner ist der Strömungskörper durch eine auf den Strömungskörper wirkende Kraft unter wenigstens einer Verformung um einen stromaufwärts des Strömungskörpers liegenden Punkt schwenkbar ausgebildet.

Der Erfindung liegt die Aufgabe zugrunde, ein Maskierungsmodul für den Einlass von Brennkraftmaschinen zur Verfügung zu stellen, das sich auf einfache Art und Weise auch in bestehende Brennkraftmaschinen einbauen lässt und hinsichtlich der Einstellbarkeit verbessert ist.

Diese Aufgabe wird gelöst mit einem Maskierungmodul mit den Merkmalen gemäß dem unabhängigen Anspruch 1.

Bei einem erfindungsgemäßen Maskierungsmodul ist ein Strömungskörper vorgesehen, der ein elastisches Material aufweist, insbesondere aus einem elastischen Material besteht, bevorzugt biegeelastisch. Zum Beispiel handelt es sich um ein elastisches Rückstellelement, insbesondere ein Federblech. Mit anderen Worten, das elastische Material ist bevorzugt federelastisch oder biegefederelastisch. Der Strömungskörper ist erfindungsgemäß durch eine auf ihn wirkende Kraft unter wenigstens teilweiser Verformung um einen stromaufwärts des Strömungskörpers liegenden Punkt schwenkbar. Anders gesagt, der Strömungskörper ist flexibel schwenkbar beziehungsweise sich verformend schwenkbar.

Das Material ist insbesondere derart und/oder in dem Maße elastisch, wie es durch die Kraftwirkung des einströmenden Gases im Einlass verformbar ist. Hierdurch ist es möglich, dass zur Verstellung des Strömungskörpers nur in eine Verstellrichtung eine Kraft auf den Strömungskörper ausgeübt werden muss. Diese Kraft kann beispielsweise die auf den Strömungskörper wirkende Strömung des Gases im Einlass sein. Die Rückstellung des Strömungskörpers erfolgt dann ohne Einwirkung einer Kraft von außen. Eine Ausführungsform des Strömungskörpers hat dazu eine Formgebung, die für die Strömung der Luft oder des Kraftstoff-Luft-Gemischs ein aerodynamischer Widerstand ist. Bei keinem oder einem nur geringen Massenstrom ragt der Strömungskörper als Abrisskante in den Querschnitt des Einlasses. Bei einem zunehmenden Massenstrom wird der Strömungskörper dann verformt und gegen die Oberfläche des Einlasses bewegt, wodurch der Querschnitt des Einlasses vergrößert wird und mehr Luft oder Kraftstoff-Luft-Gemisch in den Brennraum strömen kann.

Bei einer Weiterbildung des Strömungskörpers eines erfindungsgemäßen Maskierungsmoduls ist an diesem ein Sensor angeordnet. Hierdurch können Informationen über die Verformung des Strömungskörpers, den Massenstrom und/oder die Temperatur in dem Einlass vor dem Brennraum erfasst werden.

Bei einem erfindungsgemäßen Maskierungsmodul ist der Strömungskörper in dem Einlass einer Brennkraftmaschine eingeschoben. Der Strömungskörper kann ferner alle mechanischen Einrichtungenzur Veränderung des freien Strömungsquerschnitts des Einlasses umfassen Ein solches Maskierungsmodul, bei dem alle zur Maskierung erforderlichen, insbesondere mechanischen Bauteile in einem Modul integriert sind, ermöglicht eine einfache Montage beziehungsweise einen leichten Austausch. Bei der Montage wird das Maskierungsmodul als ein Einschub in den Einlass eingeführt und an einem Oberflächenabschnitt des Einlasses angelegt. Die Demontage erfolgt auf demselben Weg in umgekehrter Reihenfolge. Der Einschub erfolgt bei demontiertem Zylinderkopf direkt in den Einlass oder durch einen im Zylinderkopf der Brennkraftmaschine ausgebildeten Zugang.

Die Maskierung ist in vorteilhafter Konsequenz unempfindlich gegen Ablagerungen. Sie hat keine Auswirkungen auf die Gasdichtigkeit des Einlasses. Des Weiteren ist vorteilhaft, dass in dem engen zur Verfügung stehenden Bauraum des Einlasses beziehungsweise des Zylinderkopfs möglichst wenig Platz beansprucht wird. Die Maskierung kann in einer Werkstatt einfach montiert und leicht ausgetauscht werden. Gegenüber den in der Nähe des Einlassventils herrschenden Temperaturen ist sie beständig. Auch ist der Energiebedarf für den Betrieb der Maskierung möglichst gering.

Erfindungsgemäß ist also eine Brennkraftmaschine vorgesehen, bei der in dem Einlass mindestens ein erfindungsgemäßes Maskierungsmodul angeordnet ist, wobei der Strömungskörper eine Ablenkung der Strömung beim Übertritt aus dem Einlass durch die Einlassöffnung in den Brennraum ermöglicht. Durch die Ablenkung der Strömung, insbesondere durch einen erzeugten Strömungsabriss, werden in dem Brennraum gezielt Drall- und Tumblebewegungen gebildet. Die Ablenkung wird erzeugt mittels einer Verengung des Querschnitts des Einlasses. Durch die erfindungsgemäße einstellbare Verengung steigen die Tumblezahl und/oder die Drallzahl, die turbulente kinetische Energie und der Homogenitätsindex im Brennraum. Die Verengung erfolgt mittels des in dem Einlass beweglichen Strömungskörpers. Dieser bildet für die Strömung, beispielsweise in Form einer Rampe, einen Widerstand. Es hat sich hierbei als vorteilhaft erwiesen, dass der Strömungskörper eine in Strömungsrichtung möglichst große Längserstreckung aufweisen sollte. Um auf die Strömung in dem Einlass wirksam einzuwirken, ist es günstig, dass sich der Strömungskörper gegenüber der Oberfläche des Einlasses um ein bis drei, vorzugsweise zwei Millimeter erhebt. Bei einem als Rampe ausgebildeten Strömungskörper mit einer großen Längserstreckung beträgt der in den Einlass hineinreichende Anstellwinkel gegenüber der Oberfläche des Einlasses ungefähr zwei bis sieben, vorzugsweise fünf Grad. Bei diesen beiden Stellgrößen, die auch gemeinsam in einem Strömungskörper verwirklicht sein können, stellt sich eine vorteilhafte Ausnutzung des Brennraums durch den gebildeten Tumble ein. Dabei ergibt sich eine günstige Verdampfung des Kraftstoffs bei zugleich geringer Wandfilmbildung.

Das Maskierungsmodul umfasst ein Verbindungsmittel, insbesondere einen elektrischen Steckverbinder. Hierdurch ist es möglich, das Maskierungsmodul mittels elektrischer Signale anzusteuern und/oder Signale von dem Maskierungsmodul zu erhalten, beispielsweise über eine Eigenschaft des Ladegases oder den Zustand des Strömungskörpers. Weiterhin ist es mittels des nicht mechanischen Verbindungsmittels möglich, das Maskierungsmodul in dem Einlass anzuordnen, insbesondere nachzurüsten, ohne damit die Gasdichtigkeit des Einlasses zu beeinflussen. Das Verbindungsmittel verbindet zur Ansteuerung des Strömungskörpers und/oder zur Auswertung der von dem Maskierungsmodul erhaltenen Signale das Maskierungsmodul mit einer Steuerungseinrichtung der Brennkraftmaschine.

Das Maskierungsmodul umfasst neben dem Strömungskörper und dem Verbindungsmittel einen Wandler. Der Wandler dient zum Bewegen und/oder Verformen des Strömungskörpers, der mit dem Wandler verbunden ist. Der Wandler wandelt vorzugsweise ein elektrisches Signal in eine mechanische Bewegung oder andere physikalische Größe, insbesondere Druck oder Temperatur, um. Da der Wandler mit dem Strömungskörper verbunden ist, wirkt er auf diesen als Aktor. Der Wandler ist in einer Ausführungsform der Erfindung dazu ein Draht mit einem hohen Wärmeausdehnungskoeffizienten. Beispielsweise durch die Temperatur im Zylinderkopf beeinflusst ändert sich die Länge des Wandlers und der Strömungskörper wird verformt und/oder verlagert. Ist der Wandler zugleich ein elektrischer Widerstand und wird über das Verbindungsmittel ein elektrischer Strom an den Wandler angelegt, ändert sich die Temperatur des Wandlers in Abhängigkeit der angelegten Spannung und/oder Stromstärke. So kann der Strömungskörper schalt- bzw. regelbar verformt und/oder verlagert werden. Die Erwärmung des Wandlers durch elektrische Energie kann außerhalb der in dem Einlass herrschenden Temperaturbereiche liegen, wodurch die Beeinflussung des Strömungskörpers unabhängig von der Temperatur in dem Einlass möglich ist.

Günstig ist in einer vorteilhaften Weiterbildung der Erfindung, dass der Wandler aus einem thermisch reagierenden Formgedächtnismaterial, zum Beispiel eine Nickel-Titan Legierung, besteht, dessen Längenausdehnung sich beim Überschreiten eines Schwellenwerts der Temperatur ändert, wodurch die Lage und/oder die Form des Strömungskörpers veränderbar ist. Dabei hat es sich als praktikabel erwiesen, dass der Schwellenwert über den bei einem normalen Betrieb der Brennkraftmaschine auftretenden Temperaturen liegt. Somit wird sichergestellt, dass nur durch Anlegen einer Spannung der Wandler verformt wird. Nach dem Abschalten der Stromzufuhr kühlt der Wandler wieder ab und nimmt seine ursprüngliche Lage wieder ein. Die Verstellung des Strömungskörpers erfolgt über eine Änderung der Temperatur des Wandlers in einer Spannweite von beispielsweise zwanzig Kelvin, vorzugsweise von fünf Kelvin.

Ist der Wandler aus einem Formgedächtnismaterial gefertigt, kann er zugleich auch als Rückstellmittel für sich selbst, aber auch für den Strömungskörper dienen. So ist es möglich, die Änderung der Länge des Wandlers und auch die Stellung des Strömungskörpers genau zu justieren. Eine vom Betriebspunkt der Brennkraftmaschine abhängige Maskierung ist möglich.

In konkreten Ausführungsformen der Erfindung besteht der Strömungskörper aus einem elastischen Rückstellelement, insbesondere einem Federblech. Nach Beendigung der Einwirkung des Wandlers auf den Strömungskörper kehrt dieser aufgrund der auftretenden Rückstellkraft wieder in die ursprüngliche Position, die Ausgangslage, zurück.

Vorzugsweise kann vorgesehen sein, dass der Strömungskörper in seiner Ausgangslage maximal in den Einlass hineinragt und den freien Querschnitt des Einlasses verengt. Wird an dem Wandler eine Spannung angelegt, wird der Strömungskörper in Richtung zur Oberfläche des Einlasses beziehungsweise in Richtung zum Maskierungsmodul hin bewegt und/oder verformt, insbesondere unter wenigstens teilweiser Verformung schwenkt, bis der freie Querschnitt des Einlasses nahezu vollständig freigegeben ist.

Der Wandler und der Strömungskörper können auch einteilig als ein einheitliches Bauteil ausgeführt sein. Die Bewegung des Wandlers bei der Ansteuerung kann eine Verschiebung, beispielsweise parallel zu der Längserstreckung des Einlasses, ein Schwenken oder eine Verdrehung um eine Achse und/oder eine Verformung sein.

Das Maskierungsmodul hat aufgrund der gewählten Komponenten und des Aufbaus eine sehr kompakte Bauform. Diese ermöglicht auch einen Einbau in bestehende Brennkraftmaschinen, ohne den Kanalquerschnitt des Einlasses maßgeblich zu reduzieren. Um das Maskierungsmodul durch einen im Zylinderkopf der Brennkraftmaschine ausgebildeten Zugang in den Einlass einzuführen, muss der Zylinderkopf einen solchen separaten Zugang aufweisen. Das Maskierungsmodul umfasst den Strömungskörper, einen Wandler und das Verbindungsmittel, welche alle in einem Gehäuse des Maskierungsmoduls angeordnet sind. Der Strömungskörper ist dabei an dem Gehäuse und an dem Wandler beweglich gehalten. Der Wandler beziehungsweise die Verbindungsstelle von Wandler und Strömungskörper ist relativ zu dem Gehäuse und auch relativ zu dem Lager des Strömungskörpers an dem Gehäuse beweglich. Durch die Veränderung der Relativposition von Lager und Verbindungsstelle ist es möglich, den Strömungskörper zu verformen und/oder dessen Position in dem Einlass zu verändern. Weiterhin ist dem Maskierungsmodul noch ein Befestigungsmittel zugeordnet, mittels dessen das Maskierungsmodul in dem Einlass gehalten ist.

Eine Ausführungsform des Maskierungsmoduls ist es, dass in dem Maskierungsmodul mehrere Wandler angeordnet sind, welche zum Einwirken auf den Strömungskörper unabhängig voneinander in dem Maskierungsmodul geführt und/oder mit dem Strömungskörper verbunden sind. Mehrere voneinander unabhängige Wandler ermöglichen eine Verstellung und/oder Verformung des Strömungskörpers in mehrere Richtungen und/oder um mehrere Achsen. Die Verstellungen und/oder Verformungen können physisch alternativ oder überlagernd und/oder zeitlich gleichzeitig, versetzt oder nacheinander erfolgen. So ist es beispielsweise möglich, dass der Strömungskörper einerseits zum Zentrum des Einlasses hin verbogen wird und andererseits um eine parallel zur Längserstreckung des Einlasses orientierte Achse gedreht wird. Damit sind zusätzliche Strömungseffekte, wie die Generierung einer zusätzlichen Drallkomponente, einstellbar.

Solche zusätzlichen Drall- oder Tumblekomponenten können auch erzeugt werden, wenn bei einer Brennkraftmaschine mit einem ersten und zumindest einem weiteren Einlass je Brennraum in jedem Einlass ein Maskierungsmodul positioniert ist, wobei die Maskierungsmodule unabhängig voneinander gesteuert werden. Dabei können die Maskierungsmodule zur Erzeugung weiterer Strömungseffekte in den Einlässen in unterschiedlichen, voneinander abweichenden Positionen angeordnet sein. So ist es insbesondere möglich, Drall und Tumble einzeln oder zugleich unabhängig voneinander gesteuert zu erzeugen. Derartige Strömungseffekte sind auch realisierbar bei Brennkraftmaschinen mit einem Einlass oder mit mehreren Einlässen je Brennraum, indem in einem Einlass mehrere Maskierungsmodule angeordnet sind.

Weiterhin ist es in einer Weiterbildung der Erfindung günstig, dass an dem Strömungskörper und/oder an dem Wandler ein Sensor angeordnet ist. Hierdurch kann beispielsweise der Grad der Auslenkung des Strömungskörpers und/oder ein Kennwert des Wandlers, wie der temperaturabhängige Widerstand, erfasst werden. Die Werte des Sensors können zur Diagnose der Brennkraftmaschine ebenso genutzt werden wie zur Regelung der Stellung des Strömungskörpers. Auch kann es möglich sein, Defekte, wie einen gerissenen Wandlerdraht, zu erfassen. Die von dem Sensor erfassten Werte werden von einer Übertragungseinrichtung des Maskierungsmoduls an eine Steuerungseinrichtung der Brennkraftmaschine übermittelt. Dies erfolgt kabellos oder über das elektrische Verbindungsmittel.

Bei der mit ihren zahlreichen, teilweise optionalen Merkmalen vorgestellten Art der Maskierung ist es möglich, in Abhängigkeit eines Betriebspunkts einer Brennkraftmaschine die gewünschten Strömungseffekte durch ein Motorsteuergerät, die Steuerungseinrichtung, einstellen zu können. So können die Vorteile der Maskierung, nämlich die Ladungsbewegung im Brennraum zu erhöhen, in bestimmten Betriebsbereichen, wie dem Teillastbetrieb, genutzt werden, ohne die Nachteile, wie die Verengung des Leitungs- oder Ventilquerschnitts in anderen Betriebsbereichen, beispielsweise im Volllastbetrieb, in Kauf nehmen zu müssen.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine schematische Darstellung einer ersten Ausführungsform einer verstellbaren Maskierung;
- Fig. 2: eine schematische Darstellung einer zweiten Ausführungsform einer verstellbaren Maskierung;
- Fig. 3: eine schematische Darstellung einer dritten Ausführungsform einer verstellbaren Maskierung;
- Fig. 4: eine schematische Darstellung eines Zylinderkopfausschnitts mit einer vierten Ausführungsform einer verstellbaren Maskierung mit einem Maskierungselement.

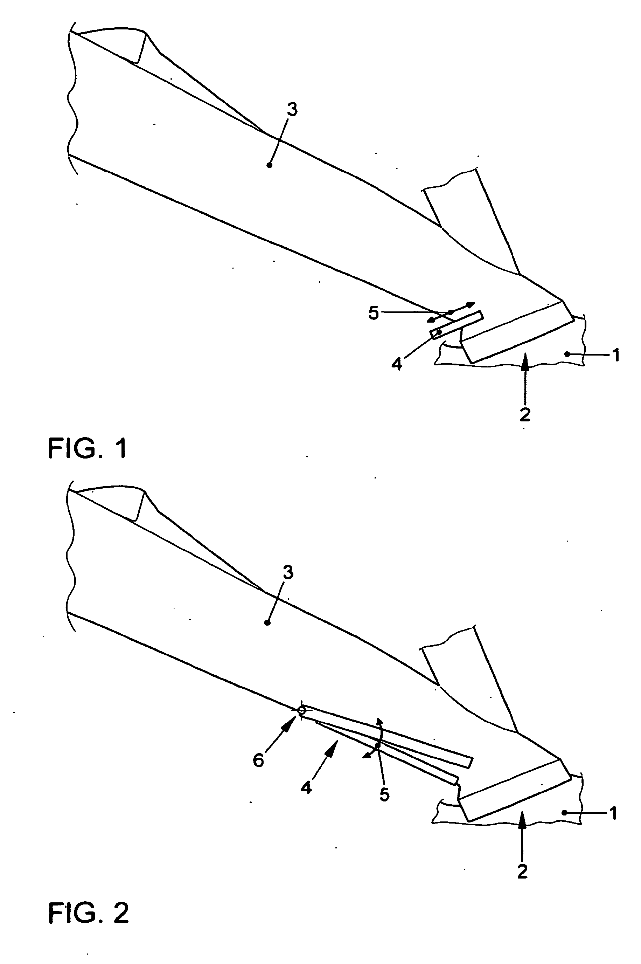

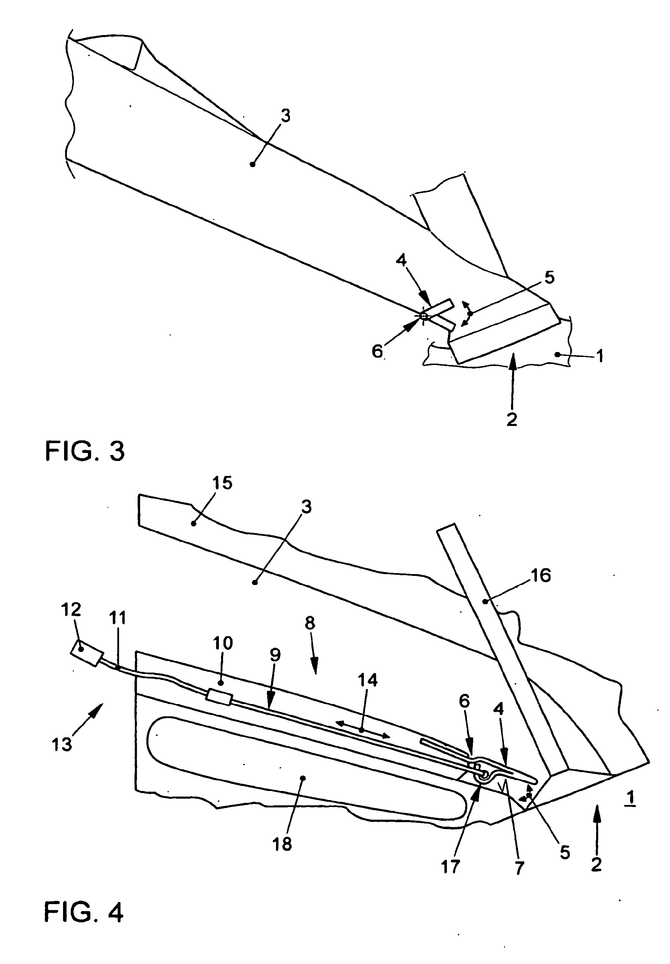

Die Figuren 1, 2 und 3 zeigen unterschiedliche Ausführungsformen für verstellbare Maskierungen. Die Bewegung des Ladegases in einem Brennraum 1 einer hier nicht weiter dargestellten Brennkraftmaschine kann durch eine Maskierung der Einlassöffnung 2 und/oder des kanalförmigen Einlasses 3 im Bereich der Einlassöffnung 2 gesteigert werden. Eine Maskierung ist eine Verengung in dem Einlass 3 und/oder der Einlassöffnung 2 für die Strömung des Ladegases, bei der zumindest lokal ein Abriss der Strömung und somit eine Verwirbelung des Ladegases erzeugt wird. Um den Einfluss auf die Strömung in Abhängigkeit von einzelnen Betriebspunkten der Brennkraftmaschine realisieren zu können, ist als Maskierung ein verstellbar gelagerter und/oder verformbarer Strömungskörper 4 vorgesehen. Für die Erzeugung eines Strömungsabrisses wird der Strömungskörper 4 aus einer Ruheposition in den Einlass 3 hinein zur Mitte dessen Querschnitts hin bewegt. In der Ruheposition liegt der Strömungskörper konturbündig an der in Figur 4 gezeigten Oberfläche 7 des Einlasses 3 an. In Figur 1 ist ein Strömungskörper 4 angedeutet, der in Richtung des Pfeils 5 translatorisch verschieblich gelagert ist. Die Figuren 2 und 3 zeigen Strömungskörper 4, die nach Art einer Rampe um einen Drehpunkt 6 herum verschwenkbar ausgeführt sind. Der in Figur 2 angedeutete Strömungskörper 4 hat in der Ruheposition eine große Ausdehnung in Längsrichtung des Einlasses 3, während der in Figur 3 dargestellte Strömungskörper 4 in Ruheposition eine kleine Ausdehnung in Längsrichtung aufweist.

Figur 4 zeigt einen Ausschnitt eines Zylinderkopfs 15 mit einem Einlass 3 und einer vierten Ausführungsform der in den Figuren 1 bis 3 angedeuteten Maskierungen. Die Einlassöffnung 2 zwischen Einlass 3 und Brennraum 1 ist mit einem Ventil 16 verschließbar. Der Zylinderkopf 15 hat weiterhin einen Kühlmittelkanal 18. Zur Maskierung ist in dem Einlass 3 ein Maskierungsmodul 8 eingeschoben. Das Maskierungsmodul 8 umfasst den verstellbaren Strömungskörper 4, einen Wandler 9, welcher zum Bewegen und/oder Verformen des Strömungskörpers 4 mit diesem verbunden ist, und ein Gehäuse 10. Das Gehäuse 10 dient dem Strömungskörper 4 und dem Wandler 9 als Widerlager, wobei der Strömungskörper 4 an dem Wandler 9 und an dem Gehäuse 10 relativ zu diesen verstellbar befestigt ist. Der Wandler 9 ist über ein eine elektrische Leitung 11 und einen Steckkontakt 12 umfassendes Verbindungsmittel 13 mit den hier nicht dargestellten Leitungseinrichtungen einer Steuerungseinrichtung der Brennkraftmaschine verbunden. Über das Verbindungsmittel 13 wird der Wandler 9 durch Zuführung elektrischer Energie erwärmt. Dabei ändert sich die Länge des Wandlers 9, beispielsweise zieht sich der Wandler 9 bei Verwendung eines Formgedächtnismaterials zusammen und bewegt damit den Strömungskörper 4 nach unten zur Oberfläche 7 des Einlasses 3 hin. Unterschreitet die Temperatur des Wandlers 9 beim Abkühlen einen Schwellenwert, ändert sich die Länge des Wandlers 9 entgegengesetzt. In dem beschriebenen Ausführungsbeispiel dehnt sich der Wandler 9 wieder aus, wodurch der Strömungskörper 4 nach oben in den Einlass 3 hineingeschwenkt wird. Aus der Änderung der Länge des Wandlers 9 resultiert eine durch den Pfeil 14 angedeutete lineare Bewegung einer Verbindungsstelle 17 von Wandler 9 und Strömungskörper 4. Der Strömungskörper 4 ist weiterhin mit dem Gehäuse 10 verbunden. Wird der Wandler 9 mit elektrischer Energie versorgt, erwärmt sich dieser und dehnt sich aus. Aufgrund der daraus resultierenden Bewegung der Verbindungsstelle 17 relativ zum Gehäuse 10 wird der Strömungskörper 4 verformt und um den Drehpunkt 6 verschwenkt. Das Maskierungsmodul 8 umfasst also alle mechanischen Einrichtungen zur Veränderung des freien Strömungsquerschnitts des Einlasses 3.

### Bezugszeichenliste

- 1: Brennraum
- 2: Einlassöffnung
- 3: Einlass
- 4: Strömungskörper
- 5: Pfeil

- 6: Drehpunkt
- 7: Oberfläche
- 8: Maskierungsmodul
- 9: Wandler
- 10: Gehäuse

- 11: Leitung
- 12: Steckkontakt
- 13: Verbindungsmittel
- 14: Pfeil
- 15: Zylinderkopf

- 16: Ventil
- 17: Verbindungsstelle
- 18: Kühlmittelkanal

## Patentansprüche

1. Maskierungsmodul (8) für den Einlass (3) einer Brennkraftmaschine mit einem Strömungskörper (4), welcher in dem Einlass (3) der Brennkraftmaschine angeordnet eine Ablenkung der durch den Einlass (3) strömenden Luft und/oder des Kraftstoff-Luft-Gemischs beim Übertritt aus dem Einlass (3) durch eine Einlassöffnung (2) in einen Brennraum (1) ermöglicht, wobei der Strömungskörper (4) ein elastisches Material, aufweist, wobei der Strömungskörper (4) durch eine auf ihn wirkende Kraft unter wenigstens teilweiser Verformung um einen stromaufwärts des Strömungskörpers (4) liegenden Punkt schwenkbar ist, wobei das Maskierungsmodul (8)in dem Einlass (3) in diesen einschiebbar angeordnet ist und wobei das Maskierungsmodul (8) den Strömungskörper (4), einen Wandler (9), welcher zum Schwenken des Strömungskörpers (4) unter wenigstens teilweiser Verformung mit diesem verbunden ist, und ein Verbindungsmittel (13) umfasst, welche alle in einem Gehäuse (10) des Maskierungsmoduls (8) angeordnet sind, wobei der Wandler (9) relativ zu dem Gehäuse (10) und auch relativ zu dem Lager des Strömungskörpers an dem Gehäuse beweglich ist.

2. Maskierungsmodul nach dem vorstehenden Anspruch, **dadurch gekennzeichnet, dass** das Maskierungsmodul (8) alle mechanischen Einrichtungen zur Veränderung des freien Strömungsquerschnitts des Einlasses (3) umfasst.

3. Maskierungsmodul (8) nach einem oder mehreren der Ansprüche 1 oder 2,
**dadurch gekennzeichnet,**
**dass** der Wandler (9) ein Formgedächtnismaterial ist.

4. Maskierungsmodul (8) nach zumindest einem der vorangehenden Ansprüche,
**dadurch gekennzeichnet,**
**dass** das Verbindungsmittel (13) ein elektrischer Steckverbinder ist.

5. Maskierungsmodul (8) nach zumindest einem der vorangehenden Ansprüche,
**dadurch gekennzeichnet,**
**dass** das Maskierungsmodul (8) ein Gehäuse (10) als Widerlager für den Wandler (9) und das Verbindungsmittel (13) umfasst.

6. Maskierungsmodul (8) nach zumindest einem der vorangehenden Ansprüche, **dadurch gekennzeichnet,**
**dass** der Wandler (9) aus einem thermisch reagierenden Formgedächtnismaterial besteht, dessen Längenausdehnung sich beim Überschreiten eines Schwellenwerts der Temperatur ändert, wodurch der Strömungskörper (4) unter wenigstens teilweiser Verformung schwenkbar ist.

7. Maskierungsmodul (8) nach zumindest einem der vorangehenden Ansprüche; **dadurch gekennzeichnet,**
**dass** in dem Maskierungsmodul (8) mehrere Wandler (9) angeordnet sind, welche zum Einwirken auf den Strömungskörper (4) unabhängig voneinander in dem Maskierungsmodul (8) geführt und/oder mit dem Strömungskörper (4) verbunden sind.

8. Maskierungsmodul (8) nach zumindest einem der vorangehenden Ansprüche, **dadurch gekennzeichnet,**
**dass** an dem Strömungskörper (4) und/oder an dem Wandler (9) ein Sensor angeordnet ist.

9. Brennkraftmaschine mit wenigstens einem Brennraum (1) und einer Einlassöffnung (2) zu dem Brennraum (1), die durch ein Einlassventil (16) verschließ- und öffenbar ist, wobei dem Brennraum (1) ein kanalförmiger Einlass (3) für Luft und/oder ein Kraftstoff-Luft-Gemisch zugeordnet ist,
**dadurch gekennzeichnet,**
**dass** in dem Einlass (3) mindestens ein Maskierungsmodul (8) nach zumindest einem der vorangehenden Ansprüche angeordnet ist.

10. Brennkraftmaschine nach Anspruch 9,
**dadurch gekennzeichnet,**
**dass** einem Brennraum (1) ein erster Einlass und zumindest ein weiterer Einlass zugeordnet ist, wobei in jedem Einlass ein Maskierungsmodul (8) positioniert ist.

## Claims

1. Masking module (8) for the inlet (3) of an internal combustion engine having a flow body (4) which, arranged in the inlet (3) of the internal combustion engine, permits the air flowing through the inlet (3) and/or the fuel-air mixture to be deflected through an inlet opening (2) into a combustion chamber (1) when it emerges from the inlet (3), wherein the flow body (4) has an elastic material, wherein the flow body (4) can be pivoted by a force acting on it, with at least partial deformation, about a point lying upstream of the flow body (4), wherein the masking module (8) is arranged in the inlet (3) so as to be insertable therein, and wherein the masking module (8) comprises the flow body (4), a transducer (9) which is connected to the flow body (4) in order to pivot same with at least partial deformation, and a connecting means (13), which are all arranged in a housing (10) of the masking module (8), wherein the transducer (9) is movable relative to the housing (10) and also relative to the bearing of the flow body on the housing.

2. Masking module according to the proceeding claim, **characterized in that** the masking module (8) comprises all the mechanical devices for changing the free flow cross section of the inlet (3).

3. Masking module (8) according to one or more of Claims 1 and 2,
**characterized**
**in that** the transducer (9) is a shape memory material.

4. Masking module (8) according to at least one of the preceding claims,
**characterized**
**in that** the connecting means (13) is an electric plug-type connector.

5. Masking module (8) according to at least one of the preceding claims,
**characterized**
**in that** the masking module (8) comprises a housing (10) as an abutment for the transducer (9) and the connecting means (13).

6. Masking module (8) according to at least one of the preceding claims,
**characterized**
**in that** the transducer (9) is composed of a thermally reacting shape memory material whose longitudinal extension changes when a threshold value of the temperature is exceeded, as a result of which the flow body (4) can be pivoted with at least partial deformation.

7. Masking module (8) according to at least one of the preceding claims,
**characterized**
**in that** a plurality of transducers (9) are arranged in the masking module (8), said transducers (9) being led in the masking module (8) and/or connected to the flow body (4) independently of one another in order to act on the flow body (4).

8. Masking module (8) according to at least one of the preceding claims,
**characterized**
**in that** a sensor is arranged on the flow body (4) and/or on the transducer (9).

9. Internal combustion engine having at least one combustion chamber (1) and an inlet opening (2) leading to the combustion chamber (1), which inlet opening (2) can be closed and opened by means of an inlet valve (16), wherein a duct-shaped inlet (3) for air and/or a fuel-air mixture is assigned to the combustion chamber (1),
**characterized**
**in that** at least one masking module (8) according to at least one of the preceding claims is arranged in the inlet (3).

10. Internal combustion engine according to Claim 9,
**characterized**
**in that** a first inlet and at least one further inlet are assigned to a combustion chamber (1), wherein a masking module (8) is positioned in each inlet.

## Revendications

1. Module de masquage (8) pour l'admission (3) d'un moteur à combustion interne comprenant un corps d'écoulement (4) qui, disposé dans l'admission (3) du moteur à combustion interne, permet une déviation de l'air et/ou du mélange carburant-air s'écoulant à travers l'admission (3) lors d'un passage hors de l'admission (3) à travers une ouverture d'admission (2) dans une chambre de combustion (1), le corps d'écoulement (4) présentant un matériau élastique, le corps d'écoulement (4) pouvant pivoter autour d'un point situé en amont du corps d'écoulement (4), sous l'effet d'une force agissant sur lui en se déformant au moins en partie, le module de masquage (8) étant disposé dans l'admission (3) de manière à pouvoir être enfoncé dans celle-ci et le module de masquage (8) comprenant le corps d'écoulement (4), un convertisseur (9) qui est connecté au corps d'écoulement (4) en se déformant au moins partiellement pour permettre le pivotement du corps d'écoulement, et un moyen de connexion (13), lesquels sont tous disposés dans un boîtier (10) du module de masquage (8), le convertisseur (9) pouvant être déplacé par rapport au boîtier (10) et également par rapport au palier du corps d'écoulement sur le boîtier.

2. Module de masquage selon la revendication précédente, **caractérisé en ce que** le module de masquage (8) comprend tous les dispositifs mécaniques permettant de faire varier la section transversale d'écoulement libre de l'admission (3).

3. Module de masquage (8) selon l'une quelconque ou plusieurs des revendications 1 ou 2, **caractérisé en ce que** le convertisseur (9) est un matériau à mémoire de forme.

4. Module de masquage (8) selon au moins l'une quelconque des revendications précédentes, **caractérisé en ce que** le moyen de connexion (13) est un connecteur enfichable électrique.

5. Module de masquage (8) selon au moins l'une quelconque des revendications précédentes, **caractérisé en ce que** le module de masquage (8) comprend un boîtier (10) en tant que butée pour le convertisseur (9) et le moyen de connexion (13).

6. Module de masquage (8) selon au moins l'une quelconque des revendications précédentes, **caractérisé en ce que** le convertisseur (9) se compose d'un matériau à mémoire de forme réagissant thermiquement, dont l'étendue longitudinale varie en cas de dépassement d'une valeur seuil de la température, de sorte que le corps d'écoulement (4) puisse pivoter en se déformant au moins partiellement.

7. Module de masquage (8) selon au moins l'une quelconque des revendications précédentes, **caractérisé en ce que** dans le module de masquage (8) sont disposés plusieurs convertisseurs (9), qui sont guidés indépendamment les uns des autres dans le module de masquage (8) pour agir sur le corps d'écoulement (4) et/ou qui sont connectés au corps d'écoulement (4).

8. Module de masquage (8) selon au moins l'une quelconque des revendications précédentes, **caractérisé en ce qu'**un capteur est disposé au niveau du corps d'écoulement (4) et/ou au niveau du convertisseur (9).

9. Moteur à combustion interne comprenant au moins une chambre de combustion (1) et une ouverture d'admission (2) dans la chambre de combustion (1), laquelle ouverture d'admission peut être ouverte et fermée par une soupape d'admission (16), une admission en forme de canal (3) pour l'air et/ou un mélange carburant-air étant associée à la chambre de combustion (1), **caractérisé en ce qu'**au moins un module de masquage (8) selon au moins l'une quelconque des revendications précédentes est disposé dans l'admission (3).

10. Moteur à combustion interne selon la revendication 9, **caractérisé en ce qu'**une première admission et au moins une admission supplémentaire sont associées à une chambre de combustion (1), un module de masquage (8) étant positionné dans chaque admission.
